# EUROPEAN PATENT SPECIFICATION

(11) **EP 3 880 335 B1**
(45) Date of publication and mention of the grant of the patent: **29.03.2023**
(21) Application number: 20796947.8
(22) Date of filing: 21.10.2020
(51) Int. Cl.: B01D 39/08, B01D 39/16

(54) **A METHOD FOR PREPARING A COMPOSITE FILTER MEDIUM AND THE COMPOSITE FILTER MEDIUM OBTAINED WITH THIS METHOD**
VERFAHREN ZUR HERSTELLUNG EINES VERBUNDFILTERMEDIUMS UND DAS MIT DIESEM VERFAHREN ERHALTENE VERBUNDFILTERMEDIUM
PROCÉDÉ DE PRÉPARATION D'UN MILIEU FILTRANT COMPOSITE ET MILIEU FILTRANT COMPOSITE OBTENU AVEC CE PROCÉDÉ

(30) Priority: 24.10.2019 IT 201900019760; 19.10.2020 IT 202000024580
(43) Date of publication of application: 22.09.2021
(73) Proprietor: SAATI S.p.A., 22070 Appiano Gentile (CO) (IT)
(72) Inventor: MOMENTÈ, Roberto, 22070 Appiano Gentile (CO) (IT); LUCIGNANO, Carmine, 22070 Appiano Gentile (CO) (IT); SIMONE, Martina, 22070 Appiano Gentile (co) (IT); CANONICO, Paolo, 22070 Appiano Gentile (CO) (IT)
(74) Representative: Rastelli, Franco
(86) International application number: PCT/IB2020/059889
(87) International publication number: WO 2021/079282

(56) References cited:
- US-A1- 2014 275 692
- US-A1- 2017 106 334
- US-A1- 2018 237 967

## Description

### BACKGROUND OF THE INVENTION

The present invention relates to a method for preparing a composite filter medium. The invention also extends to the composite filter medium obtained with this method.

The field of the invention is that of composite filter media, in particular those used for protection against the intrusion of dirt particles and for repelling liquids in general such as water and oils, so as to ensure a high permeability to air, i.e. a low acoustic impedance, for the best sound transfer; for example, in consumer electronics appliances, especially the electroacoustic components of mobile phones.

Known composite filter media are formed by a combination of at least one layer of nanofibers supported by a weft and warp base fabric, in which the nanofiber layer is deposited on the base fabric by means of an electrospinning process and in which a plasma coating is applied to the base fabric and the nanofibers. This method produces a composite filter medium in which the nanofiber layer adheres to the base fabric.

In its final application, the filter medium is typically packaged in "*die cut parts*", i.e. in small pieces of material, coupled with one or two layers of PSA (*pressure sensitive adhesive*), or substantially an adhesive used to assemble the filter medium on the plastic or metal body of the device (for example, a smartphone) containing the opening that is to be protected.

As the filter medium must guarantee protection against the intrusion of particles and pressurized liquids while maintaining a high air flow, i.e. a high air permeability that ensures the lowest possible acoustic impedance, the filter medium of the prior art, as mentioned above, consists of a substrate formed by a regular base fabric, covered with a layer of nanofibers, all of which is, in turn, covered with a coating layer having a very low surface energy. This coating is essential to guarantee the desired level of repellency of the filter medium to water and oils, thus ensuring resistance to the infiltration of pressurized liquids.

While, on the one hand, the low surface energy ensures high levels of performance, on the other, the repellency to water and oily liquids represents an obstacle to effective adhesion between the filter medium and the PSA. For this reason, the filter medium is difficult if not impossible to apply, possibly failing to stick to the adhesive. The consequence is that even though the filter medium ensures tightness to pressurized liquid, its poor adherence to the layers of PSA results in a risk of lateral infiltration and leaks of the pressurized liquid, which will therefore be free to penetrate between the layers of adhesive and the filter medium itself.

US 2018/237967 A1 relates to a composite for a protective vent having a carrier layer and an electrospinning membrane. US 2014/275692 A1 discloses a modified surface energy non-woven filter element. US 2017/106334 A1 deals with the problem of improving adherence between a substrate layer and a nano fiber layer by plasma treatment of the substrate layer.

### SUMMARY OF THE INVENTION

The main purpose of the present invention is to provide a composite filter medium and its manufacturing process which, compared to the known filter media of this type, gives not only the desired degree of tightness to the pressurized liquid, but also anchors the filter medium to the layer of adhesive used to fix it to its target support.

These and other objects are achieved with the method and the filter medium of claims 1 and 6, respectively. Preferred embodiments of the invention will be apparent from the remaining claims.

With respect to the known filter media, that of the invention offers the advantage of maintaining the desired level of water and oil repellency, without interfering with the secure adhesion of the filter medium to the body on which is located the opening to be protected against liquid infiltration.

The composite filter medium of the invention, in which the individual nanofibers and the individual threads of the fabric are covered with a thin highly hydrophobic and oleophobic coating, also has the ability to expel dirt and, in particular, liquids, not just water (high surface tension, 72 mN/m), but also liquids such as oils with a low surface tension (30-40 mN/m). This property of the filter medium of the invention is particularly useful in its applications as a protective screen for electroacoustic components, in particular of mobile phones. In fact, the filter medium of the invention consists of nanofibers, which offer a very high permeability to air (and a very low acoustic impedance), thus ensuring effective protection against the intrusion of particles. Moreover, due to its particular coating, the composite filter medium of the invention prevents the infiltration of water, oils and other types of liquid. In fact, the filter medium of the invention not only prevents the infiltration of these liquids but is easier to clean due to its water repellency.

### BRIEF DESCRIPTION OF THE DRAWINGS

These and other objects, advantages and features will be apparent from the following description of a preferred embodiment of the method and the filter medium according to the invention illustrated by way of a non-limiting example in the figures in the attached drawings.

In these:
- Figure 1 is a sectional and schematic view of an example of a composite filter medium of the invention;
- Figure 2 shows a detailed drawing of the nanofibers deposited by electrospinning on a corresponding thread of base fabric, in which both the nanofibers and the threads of the base fabric are all coated with a nanometric layer of water- and oil-repellent polymer, applied by plasma treatment;
- Figure 3 illustrates the electrospinning method for making a layer of nanofibers in the filter medium of the invention;
- Figure 4 schematically illustrates the plasma treatment of the filter medium of the invention, obtained by depositing the nanofiber layer made by an electrospinning process on a base fabric;
- Figure 5 illustrates the relationship between the flow rate and the pressure measured across the filter medium for the dry sample and the wet sample;
- Figure 6 illustrates the relationship between the emptying pressure and the corresponding pressure drop for the declogging test carried out on two different samples.

### DESCRIPTION OF THE PREFERRED EMBODIMENTS

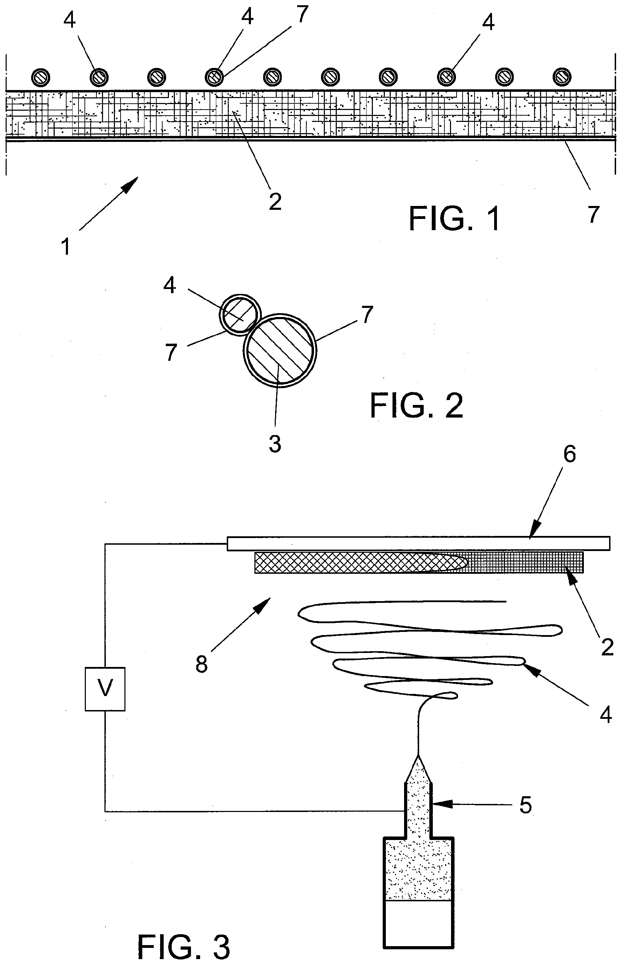

The composite filter medium of the invention, indicated as a whole by the number 1 in Figure 1, comprises a support formed by a base fabric 2 of the warp and weft type, preferably a monofilament fabric, on the surface of which nanofibers 4 are deposited by electrospinning. Suitable for the invention are the monofilaments 3 made starting from monofilaments of polyester, polyamide, polypropylene, polyether sulfone, polyimide, polyamide imide, polyphenylene sulfide, polyether ether ketone, polyvinylidene fluoride, polytetrafluoroethylene, aramid, with a mesh opening of the base fabric 2 in a range from 2500 microns to 5 microns.

The base fabric used in the preparation of the composite filter medium of the invention is selected from a wide range of synthetic monofilament fabrics, which differ in the chemical nature of the monofilament used for weaving, such as polyester, polyamide, polypropylene, polyether sulfone, polyimide, polyamide imide, polyphenylene sulfide, polyether ether ketone, polyvinylidene fluoride, polytetrafluoroethylene, aramid. Also suitable for the invention are base fabrics with textile construction of 4-300 threads/cm, thread diameter of 10-500 microns, weave with a weight of 15-300 g/m² and thickness of 18-1000 microns. For finishing and further surface treatments, in addition to metallization, use can be made of washed and heat-set "white" fabric, colored fabric, fabric subjected to plasma treatment, hydrophobic, hydrophilic, antibacterial, antistatic fabric and the like. Preferred for the invention is a polyester monofilament fabric, with 48 threads/cm, diameter 55 µm, mesh opening of the base fabric of 153 µm.

Suitable for the invention are nanofibers 4 of polyester, polyurethane, polyamide, polyimide, polypropylene, polysulfone, polyether sulfone, polyamide imide, polyphenylene sulfide, polyether ether ketone, polyvinylidene fluoride, polytetrafluoroethylene, alginate, polycarbonate, PVA (polyvinyl alcohol), PLA (polylactic acid), PAN (polyacrylonitrile), PEVA (polyethylene vinyl acetate), PMMA polymethyl methacrylate), PEO (polyethylene oxide), PE (polyethylene), PVC, PEI, PUR and polystyrene. These nanofibers can have a diameter of between 50 nm and 700 nm. PVDF (polyvinylidene fluoride) nanofibers with a diameter ranging from 75 to 200 nm are preferred.

As illustrated in Figure 3, the electrospinning process for the formation of the nanofibers 4 and their subsequent deposition on the base fabric 2, consists in injecting the material for the formation of the nanofibers 4, dissolved in a suitable solvent, through a nozzle 5 in order to spread it on an electrode 6. Due to the difference in potential between the nozzle 5 and the electrode 6, the nanofibers 4 are formed through evaporation of the solvent, due to the electric field and stretching of the polymer deposited on the electrode, by means of the nozzle. The nanofibers thus formed are then stretched and subsequently deposited on the base fabric 2.

The composite filter medium obtained in this way is then subjected to a surface treatment by plasma deposition of a polymeric layer 7 of nanometric thickness on the exposed surfaces of the fabric 2 and of the nanofiber layer 4, completely covering the external surfaces of the monofilaments 3 of the base fabric 2 and of the aforementioned nanofibers 4 (Figure 2). Said coating layer 7 has irregularities formed by nanogrooves obtained through plasma treatment in the presence of a carrier gas and without any polymer-containing gas.

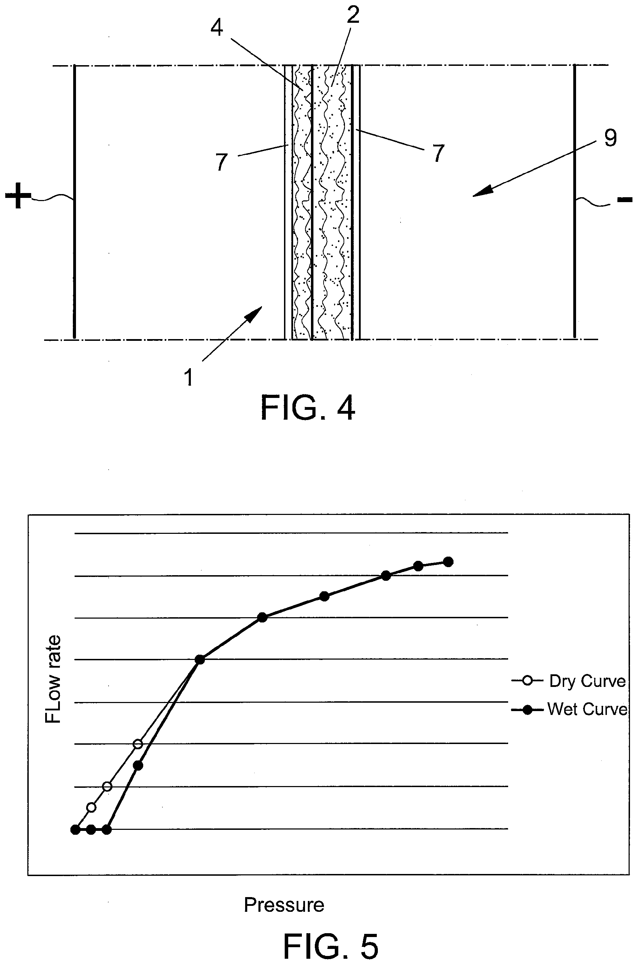

As shown in Figure 4, the composite filter medium 8, obtained from the previous electrospinning process of Figure 3, is arranged inside a plasma treatment chamber 9, in the presence of a gas forming the aforementioned coating 7 so as to cover the composite filter medium 1 of the invention.

Preferred for the invention are gases based on fluorocarbon acrylates, in particular, heptadecafluorodecyl acrylate, perfluorooctylacrylate and the like. Advantageous for the invention are the gases forming by plasma treatment a deposit of fluorocarbon acrylates, due to their water- and oil-repellent properties.

In the plasma treatment described above, a carrier gas is also used, for example the type described in WO2011089009A1.

The aforementioned plasma treatment involves the creation of a vacuum of 10-50 mTorr, an electrode power of 150-350 W and an exposure time of 0.5-6 minutes.

The coating deposited by means of plasma technology can have a thickness of up to 500 nm and, due to the particular technology used, has the structure of a continuous film, capable of coating even 3D surfaces like those of a fabric. Depending on the chemical compound used, the aforementioned coating can have various peculiar characteristics, such as hydrophobicity, oleophobicity, hydrophilicity and antistaticity.

Preferred for the invention are the coatings obtained starting from the following chemical compounds in the starting gases:
1H,1H,2H,2H-HEPTADECAFLUORODECYL ACRYLATE (CAS # 27905-45-9, H₂C=CHCO₂CH₂CH₂(CF₂)₇CF₃)
1H,1H,2H,2H-PERFLUOROOCTYL ACRYLATE (CAS # 17527-29-6, H₂C=CHCO₂CH₂CH₂(CF₂)₅CF₃)

The thickness of the coating 7 is 15-60 nm, suitable to prevent it from excessively narrowing the pores that the composite filter medium 1 forms in both the fabric 2 and the nanofibers 4, which would hinder the free passage of sound.

Tests were carried out on composite filter medium 8, as obtained from the electrospinning process of Figure 3, compared with the analogous composite filter medium 1 that was subjected to the subsequent plasma treatment of Figure 4.

In particular, the aforementioned filter medium 8 is formed by a weft and warp fabric made of synthetic monofilament 3 (for example of polyester), on which nanofibers 4, also made of synthetic material (for example polyester), have been deposited, in order to obtain an acoustic impedance of 25 MKS Rayls, measured with the Textest instrument or similar for measuring the acoustic impedance/air permeability.

After plasma treatment of the filter medium 8, it can be observed, on the composite filter medium 1 of the invention, that the acoustic impedance remains unchanged at values of 25 MKS Rayls. The air permeability value of 5,200 l/m²s at a pressure of 200 Pa and the filtration efficiency also remain unchanged.

On the other hand, a considerable increase is observed both in the angle of contact with water (from 50° to 130°), and in the angle of contact with oil (from 50° to 120° for an oil with corn oil having a surface tension of 32mN/m), where the angle of contact is measured on a drop of water or oil with the nanofibers 4, using the sessile method with Kruss instruments (drop deposition and measurement of the angle of contact by means of high resolution camera).

### Declogging test

In order to provide evidence of the observations set out above, a test method was developed with a view to numerically quantifying the energy necessary to remove the oil deposited on the surface of the composite filter medium of the invention.

This test was carried out with a porometer (PMI 1200, manufactured by PMI), an instrument that uses capillary flow porometry to determine the bubble point, the minimum pore size and the distribution of the pore size on the sample tested. Capillary flow porometry, or simply porometry, is based on an extremely simple principle: measuring the pressure of a gas necessary to force the passage of a wetting liquid through the pores of the material. The pressure at which the pores empty is inversely proportional to the size of the pores themselves. Large pores require low pressures while small pores require high pressures.

The test consists in cutting the sample to be analyzed and placing it inside the test chamber. Subsequently the sample is held in position by means of O-rings, in such a way as to be sure there are no lateral air leaks. Once the chamber is closed, the air permeability of the filter medium is measured, obtaining a curve that puts the air flow through the sample in relation with the pressure drop measured across the filter medium (dry curve in the graph in Figure 5). Once the dry curve has been obtained, the test chamber is opened and, leaving the sample in position, its surface is covered with a test liquid having a low surface tension (typically < 20mN/m). The test chamber is then closed and the air permeability of the material is measured again. As the material is occluded by the test liquid, the pressure will increase, but no air flow will be measured downstream, until the pressure is high enough to force the liquid to pass through the pores. From this moment on, the pores of decreasing size will be emptied with increasing pressure values until the sample (previously wet) is completely dry and the two curves of Figure 5 overlap. Without going into analytical details, on a qualitative level, from the difference between the two curves, the bubble point value (largest pore), the size of the smallest pore and the distribution of the pore size can be determined.

In the specific case, in order to determine the oil repellency/removal capacity, this test was carried out but using corn oil (surface tension 32 mN/m) in place of the test liquid.

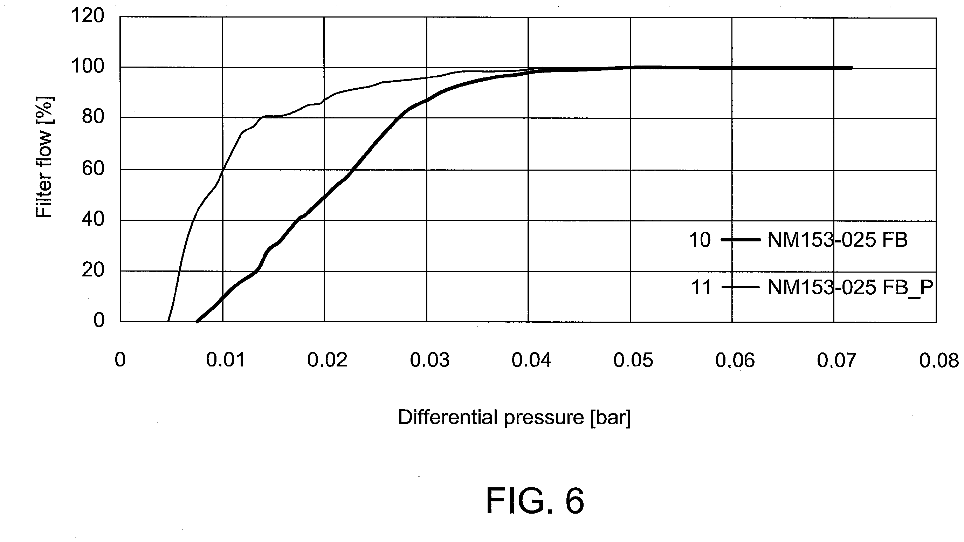

The graph in Figure 6 shows the emptying pressure and the corresponding pressure drop (energy required for emptying). The samples considered in the graph in Figure 6 are the filter medium 8 from electrospinning treatment (curve 10) and the filter medium 1 of the invention (curve 11). It can be seen that with the filter medium 1 of the invention, the oil can be removed at decidedly lower pressures or, at the same pressure, a decidedly larger amount of oil is removed than with the composite filter medium 8, which has not undergone the plasma treatment.

According to the invention, it has now surprisingly been discovered that, by adding to the method described above a further step of plasma treatment of the composite filter medium 1 coated with the polymeric layer 7, this time, however, in the presence of the carrier gas only and therefore without the gas forming the aforementioned polymeric coating 7, the same filter medium exhibits not only the desired degree of repellency to water and oily liquids but also an excellent level of adhesion to the PSA layer.

In fact, the method of the invention comprises an additional step of plasma treatment of the filter medium 1 provided with polymeric coating 7, that is, after the described deposition of said coating, but this time without the polymer-containing gas.

During this additional step, a suitable working pressure is set inside the plasma treatment chamber 9 (10-400 mTorr), an electrode power of 100-2000 W and an exposure time of 5 seconds to 5 minutes, within which a carrier gas is injected, preferably selected from nitrogen, helium, argon and oxygen.

In this step and given the inert nature of the gas used, the material constituting the filter medium does not undergo any further coating process. The ions of the carrier gas that are formed during the plasma treatment impact, with some energy, on the surface of the coating 7 deposited in the previous step, thus reactivating the latter and creating surface irregularities, for example in the form of microcorrugations or nanogrooves that favor the adhesion of the polymeric coating 7 to the PSA adhesive layer.

Although, on the one hand, the action undergone by this coating affects its integrity and continuity, consequently modifying its surface energy value and reducing, though not significantly, the level of water and oil repellency of the filter medium, on the other, the adhesive strength of the filter medium to the PSA layer is considerably increased, reaching a satisfactory compromise between the water/oil repellency and workability of the filter medium.

In fact, the filtering system obtained using the described method of the invention ensures a very large angle of contact with oil (130-135°), with which the known technique normally associates a very low value of adhesion with the PSA, thus jeopardizing the correct seal and the ease of assembly of the "*die cut parts*".

The results offered by the filter medium prepared with the method of the invention are shown in the following table, the values of which were measured on a filter medium having a layer 7 of polymeric material, subsequently subjected to a plasma treatment carried out in the presence of helium as a carrier gas, with a vacuum of 100 mTorr, an electrode power of 700 W and an exposure time of 2 minutes:

| | Angle of contact with oil (°) | Minimum angle of contact required for the application (°) | Adhesion level to PSA (gf/20mm) | Minimum level of adhesion required (gf/20mm) |
|---|---|---|---|---|
| Electrospinning process + plasma deposition | 130-135 | 110 | 20 | 100 |
| Electrospinning process + plasma deposition + plasma treatment of the coating deposited in the previous step | 115 | 110 | 220 | 100 |

where "gf/20mm" represents the value in gram-force of adhesion of the filter medium on a 20 mm wide PSA sample.

From these results it can be observed that, after the additional step of plasma reactivation of the polymer coating 7 formed in the previous step, the filter medium thus obtained achieves both very large angles of contact with oil (>110°), and a much higher adhesion level with PSA than the minimum required, i.e. 100 gf/mm.

## Claims

1. A method for preparing a composite filter medium (1), **characterized in that** it comprises a step of forming a first filter medium (8) by depositing nanofibers (4) on a base fabric (2), by means of an electrospinning process, a subsequent step of covering said filter medium (1) by plasma deposition of a polymeric nanometric coating (7) on said first filter medium (8) and a subsequent step of forming irregularities, made of nanogrooves obtained through an additional plasma treatment in the presence of a carrier gas and without any polymer-containing gas, on the surface of said coating (7), through plasma treatment of the filter medium (1) obtained in the previous plasma deposition step.

2. The method according to claim 1, **characterized in that** the electrospinning process involves the extrusion of polymer dissolved in a suitable solvent, by means of a nozzle (5), and subsequent stretching of the fibers between the nozzle itself and an electrode, thus obtaining a deposition of nanometric fibers on the base fabric, composed of monofilaments and suitably interposed between the nozzle and the electrode, the filter medium (8) thus obtained being subsequently subjected to a surface treatment through plasma deposition of a polymeric layer (7) of nanometric thickness on the exposed surfaces of the base fabric (2) and of the nanofiber layer (4), obtaining the aforementioned composite filter medium (1) in which the external surfaces of the monofilaments (3) of the base fabric (2) and of the aforementioned nanofibers (4) are coated with said polymeric layer (7).

3. The method according to claim 2, **characterized in that** the aforementioned plasma deposition treatment comprises the creation of a vacuum of 10-50 mTorr, an electrode power of 150-350 W and an exposure time of 0.5-6 minutes.

4. The method according to claim 2, **characterized in that** the aforementioned additional plasma treatment step comprises the creation of a vacuum of 10-400 mTorr, an electrode power of 100-2000 W and an exposure time between 5 seconds and 5 minutes.

5. The method according to claim 2, **characterized in that** the above carrier gas is selected from nitrogen, helium, argon and oxygen.

6. A composite filter medium, of the type comprising a base fabric (2) on which nanofibers (4) are deposited, **characterized in that** said base fabric and the aforementioned nanofibers are covered with a polymeric nanometric coating layer (7), applied by means of a plasma process, said coating layer (7) having nanogrooves obtained through plasma treatment in the presence of a carrier gas and without any polymer-containing gas.

7. A filter medium according to claim 6, **characterized in that** the aforementioned coating (7) is formed by a film having a thickness of up to 500 nm, preferably with a thickness of 15-60 nm.

8. A filter medium according to claim 6, **characterized in that** the aforementioned coating (7) is a coating based on fluorocarbon acrylates with water- and oil-repelling properties.

9. A filter medium according to claim 6, wherein the base fabric is a monofilament fabric **characterized in that** said monofilaments (3) are made starting from a monofilament of polyester, polyamide, polypropylene, polyether sulfone, polyimide, polyamide imide, polyphenylene sulfide, polyether ether ketone, polyvinylidene fluoride, polytetrafluoroethylene, aramid.

10. A filter medium according to claim 6, **characterized in that** the aforementioned base fabric (2) has a mesh opening of 2500-5 microns.

11. A filter medium according to claim 6, **characterized in that** the aforementioned base fabric (2) has a textile construction of 4-300 threads/cm, thread diameter of 10-500 microns, weave with a weight of 15-300 g/m² and thickness of 18-1000 microns.

12. A filter medium according to claim 6, **characterized in that** the aforementioned nanofibers (4) are nanofibers of polyester, polyurethane, polyamide, polyimide, polypropylene, polysulfone, polyether sulfone, polyamide imide, polyphenylene sulfide, polyether ether ketone, polyvinylidene fluoride, polytetrafluoroethylene, alginate, polycarbonate, PVA (polyvinyl alcohol), PLA (polylactic acid), PAN (polyacrylonitrile), PEVA (polyethylene vinyl acetate), PMMA (polymethyl methacrylate), PEO (polyethylene oxide), PE (polyethylene), PVC, PI or polystyrene.

13. A filter medium according to claim 6, **characterized in that** said nanofibers (4) have a diameter of between 50 nm and 700 nm, preferably they are PVDF (polyvinylidene fluoride) nanofibers with a diameter ranging from 75 to 200 nm.

14. Use of the filter medium according to one or more of the preceding claims for the protection of electroacoustic components in mobile phones.

## Patentansprüche

1. Verfahren zum Herstellen eines Verbundfiltermediums (1), **dadurch gekennzeichnet, dass** es einen Schritt zum Bilden eines ersten Filtermediums (8) durch Abscheiden von Nanofasern (4) auf einem Grundgewebe (2) mittels eines Elektrospinnprozesses, einen nachfolgenden Schritt zum Bedecken des Filtermediums (1) durch Plasmaabscheidung einer polymeren nanometrischen Beschichtung (7) auf dem ersten Filtermedium (8) und einen nachfolgenden Schritt zum Bilden von Unregelmäßigkeiten umfasst, aus Nanorillen, die durch eine zusätzliche Plasmabehandlung in Anwesenheit eines Trägergases und ohne jegliches polymerhaltiges Gas auf der Oberfläche der Beschichtung (7) erhalten werden, durch Plasmabehandlung des Filtermediums (1), das in dem vorherigen Schritt der Plasmaabscheidung erhalten wurde.

2. Verfahren nach Anspruch 1, **dadurch gekennzeichnet, dass** der Elektrospinnprozess die Extrusion eines Polymers, das in einem geeigneten Lösungsmittel gelöst ist, mittels einer Düse (5) und ein nachfolgendes Strecken der Fasern zwischen der Düse selbst und einer Elektrode umfasst, wodurch eine Abscheidung von nanometrischen Fasern auf dem Grundgewebe erhalten wird, die aus Monofilamenten bestehen und in geeigneter Weise zwischen der Düse und der Elektrode angeordnet sind, wobei das so erhaltene Filtermedium (8) nachfolgend einer Oberflächenbehandlung durch Plasmaabscheidung einer Polymerschicht (7) von nanometrischer Dicke auf den freiliegenden Flächen des Grundgewebes (2) und der Nanofaserschicht (4) unterzogen wird, wodurch das zuvor erwähnte Verbundfiltermedium (1) erhalten wird, bei dem die Außenflächen der Monofilamente (3) des Grundgewebes (2) und der zuvor erwähnten Nanofasern (4) mit der Polymerschicht (7) beschichtet sind.

3. Verfahren nach Anspruch 2, **dadurch gekennzeichnet, dass** die zuvor erwähnte Plasmaabscheidungsbehandlung die Erzeugung eines Vakuums von 10-50 mTorr, eine Elektrodenleistung von 150-350 W und eine Expositionszeit von 0,5-6 Minuten umfasst.

4. Verfahren nach Anspruch 2, **dadurch gekennzeichnet, dass** der zuvor erwähnte zusätzliche Plasmabehandlungsschritt die Erzeugung eines Vakuums von 10-400 mTorr, eine Elektrodenleistung von 100-2000 W und eine Expositionszeit zwischen 5 Sekunden und 5 Minuten umfasst.

5. Verfahren nach Anspruch 2, **dadurch gekennzeichnet, dass** das obige Trägergas ausgewählt ist aus Stickstoff, Helium, Argon und Sauerstoff.

6. Verbundfiltermedium des Typs, der ein Grundgewebe (2) umfasst, auf dem Nanofasern (4) abgeschieden sind, **dadurch gekennzeichnet, dass** das Grundgewebe und die zuvor erwähnten Nanofasern mit einer polymeren nanometrischen Beschichtungsschicht (7) bedeckt sind, die mittels eines Plasmaprozesses aufgebracht wurde, wobei die Beschichtungsschicht (7) Nanorillen aufweist, die durch Plasmabehandlung in Anwesenheit eines Trägergases und ohne jegliches polymerhaltiges Gas erhalten wurden.

7. Filtermedium nach Anspruch 6, **dadurch gekennzeichnet, dass** die zuvor erwähnte Beschichtung (7) durch einen Film mit einer Dicke von bis zu 500 nm, vorzugsweise mit einer Dicke von 15-60 nm, gebildet ist.

8. Filtermedium nach Anspruch 6, **dadurch gekennzeichnet, dass** die zuvor erwähnte Beschichtung (7) eine Beschichtung basierend auf Fluorkohlenstoffacrylaten mit wasser- und ölabweisenden Eigenschaften ist.

9. Filtermedium nach Anspruch 6, wobei das Grundgewebe ein Monofilamentgewebe ist, **dadurch gekennzeichnet, dass** die Monofilamente (3) ausgehend von einem Monofilament aus Polyester, Polyamid, Polypropylen, Polyethersulfon, Polyimid, Polyamidimid, Polyphenylensulfid, Polyetheretherketon, Polyvinylidenfluorid, Polytetrafluorethylen, Aramid hergestellt sind.

10. Filtermedium nach Anspruch 6, **dadurch gekennzeichnet, dass** das zuvor erwähnte Grundgewebe (2) eine Maschenweite von 2500-5 Mikron aufweist.

11. Filtermedium nach Anspruch 6, **dadurch gekennzeichnet, dass** das zuvor erwähnte Grundgewebe (2) eine Textilkonstruktion von 4-300 Fäden/cm, einen Fadendurchmesser von 10-500 Mikron, eine Bindung mit einem Gewicht von 15-300 g/m² und eine Dicke von 18-1000 Mikron aufweist.

12. Filtermedium nach Anspruch 6, **dadurch gekennzeichnet, dass** die zuvor erwähnten Nanofasern (4) Nanofasern aus Polyester, Polyurethan, Polyamid, Polyimid, Polypropylen, Polysulfon, Polyethersulfon, Polyamidimid, Polyphenylensulfid, Polyetheretherketon, Polyvinylidenfluorid, Polytetrafluorethylen, Alginat, Polycarbonat, PVA (Polyvinylalkohol), PLA (Polymilchsäure), PAN (Polyacrylnitril), PEVA (Polyethylenvinylacetat), PMMA (Polymethylmethacrylat), PEO (Polyethylenoxid), PE (Polyethylen), PVC, PI oder Polystyrol sind.

13. Filtermedium nach Anspruch 6, **dadurch gekennzeichnet, dass** die Nanofasern (4) einen Durchmesser zwischen 50 nm und 700 nm haben, vorzugsweise sind es PVDF (Polyvinylidenfluorid)-Nanofasern mit einem Durchmesser von 75 bis 200 nm.

14. Verwendung des Filtermediums nach einem oder mehreren der vorhergehenden Ansprüche für den Schutz von elektroakustischen Komponenten in Mobiltelefonen.

## Revendications

1. Procédé de préparation d'un milieu filtrant composite (1), **caractérisé en ce qu'**il comprend une étape de formage d'un premier milieu filtrant (8) en déposant des nanofibres (4) sur un tissu de base (2) au moyen d'un procédé d'électrofilage, une étape suivante de couverture dudit milieu filtrant (1) par dépôt au plasma d'un revêtement nanométrique polymérique (7) sur ledit premier milieu filtrant (8) et une étape suivante de formage d'irrégularités composées de nanogorges obtenues par un traitement au plasma supplémentaire en présence d'un gaz porteur et sans gaz contenant du polymère, sur la surface dudit revêtement (7), par traitement au plasma du milieu filtrant (1) obtenu dans l'étape de dépôt au plasma précédente.

2. Procédé selon la revendication 1, **caractérisé en ce que** le procédé d'électrofilage inclut l'extrusion de polymère dissous dans un solvant approprié au moyen d'une buse (5), et ensuite l'étirement des fibres entre la buse elle-même et une électrode, en obtenant ainsi un dépôt de fibres nanométriques sur le tissu de base, composé de monofilaments et interposé de manière appropriée entre la buse et l'électrode, le milieu filtrant (8) ainsi obtenu étant ensuite soumis à un traitement de surface par dépôt au plasma d'une couche polymérique (7) d'épaisseur nanométrique sur les surfaces exposées du tissu de base (2) et de la couche de nanofibres (4), obtenant le milieu filtrant composite précité (1) dans lequel les surfaces externes des monofilaments (3) du tissu de base (2) et des nanofibres précitées (4) sont revêtues avec ladite couche polymérique (7).

3. Procédé selon la revendication 2, **caractérisé en ce que** le traitement par dépôt au plasma précité comprend la création d'un vide de 10 à 50 mTorr, une puissance d'électrode de 150 à 350 W et une durée d'exposition de 0,5 à 6 minutes.

4. Procédé selon la revendication 2, **caractérisé en ce que** l'étape de traitement au plasma supplémentaire précitée comprend la création d'un vide de 10 à 400 mTorr, une puissance d'électrode de 100 à 2000 W et une durée d'exposition de 5 secondes à 5 minutes.

5. Procédé selon la revendication 2, **caractérisé en ce que** le gaz porteur précité est sélectionné parmi l'azote, l'hélium, l'argon et l'oxygène.

6. Milieu filtrant composite, de type comprenant un tissu de base (2) sur lequel des nanofibres (4) sont déposées, **caractérisé en ce que** ledit tissu de base et les nanofibres précitées sont couverts d'une couche de revêtement nanométrique polymérique (7), appliquée au moyen d'un traitement au plasma, ladite couche de revêtement (7) comportant des nanogorges obtenues par traitement au plasma en présence d'un gaz porteur et sans gaz contenant du polymère.

7. Milieu filtrant selon la revendication 6, **caractérisé en ce que** le revêtement précité (7) est constitué d'un film ayant une épaisseur de jusqu'à 500 nm, de préférence une épaisseur de 15 à 60 nm.

8. Milieu filtrant selon la revendication 6, **caractérisé en ce que** le revêtement précité (7) est un revêtement à base d'acrylate de fluorocarbone ayant des propriétés de répulsion de l'eau et de l'huile.

9. Milieu filtrant selon la revendication 6, dans lequel le tissu de base est un tissu monofilament, **caractérisé en ce que** lesdits monofilaments (3) sont fabriqués à partir d'un monofilament de polyester, polyamide, polypropylène, polyéther sulfone, polyimide, polyamide imide, sulfure de polyphénylène, polyéther éther cétone, fluorure de polyvinylidène, polytétrafluoroéthylène, aramide.

10. Milieu filtrant selon la revendication 6, **caractérisé en ce que** le tissu de base précité (2) a une ouverture de mailles de de 2500 à 5 microns.

11. Milieu filtrant selon la revendication 6, **caractérisé en ce que** le tissu de base précité (2) a une structure textile de 4 à 300 fils/cm, un diamètre de fil de 10 à 500 microns, un tissage d'un poids de 15 à 300 g/m² et une épaisseur de 18 à 1000 microns.

12. Milieu filtrant selon la revendication 6, **caractérisé en ce que** les nanofibres précitées (4) sont des nanofibres de polyester, polyuréthane, polyamide, polyimide, polypropylène, polysulfone, polyéther sulfone, polyamide imide, sulfure de polyphénylène, polyéther éther cétone, fluorure de polyvinylidène, polytétrafluoroéthylène, alginate, polycarbonate, PVA (alcool de polyvinyle), PLA (acide polylactique), PAN (polyacrylonitrile), PEVA (polyéthylène vinyle acétate), PMMA (polyméthylméthacrylate), PEO (oxyde de polyéthylène), PE (polyéthylène), PVC, PI ou polystyrène.

13. Milieu filtrant selon la revendication 6, **caractérisé en ce que** lesdites nanofibres (4) ont un diamètre de 50 nm à 700 nm, en étant de préférence des nanofibres de PVDF (fluorure de polyvinylidène) d'un diamètre allant de 75 à 200 nm.

14. Utilisation du milieu filtrant selon une ou plusieurs des revendications précédentes pour la protection de composants électroacoustiques dans des téléphones mobiles.
